(19) Europäisches Patentamt / European Patent Office / Office européen des brevets

(11) **EP 3 663 971 B1**

(12) **FASCICULE DE BREVET EUROPEEN**

(45) Date de publication et mention de la délivrance du brevet:
**01.09.2021 Bulletin 2021/35**

(21) Numéro de dépôt: **19211985.7**

(22) Date de dépôt: **28.11.2019**

(51) Int Cl.:
*G06K 9/00* *(2006.01)*   *G06K 9/40* *(2006.01)*
*H04N 5/232* *(2006.01)*

(54) **PROCEDE DE RECONNAISSANCE FACIALE**

GESICHTSERKENNUNGSVERFAHREN

FACIAL RECOGNITION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2018 FR 1872407**

(43) Date de publication de la demande:
**10.06.2020 Bulletin 2020/24**

(73) Titulaire: **Idemia Identity & Security France 92400 Courbevoie (FR)**

(72) Inventeurs:
• **BEAUDET, Jean**
  **92400 Courbevoie (FR)**
• **CHU, Baptiste**
  **92400 Courbevoie (FR)**

(74) Mandataire: **Cabinet Le Guen Maillet**
   **3, impasse de la Vigie**
   **CS 71840**
   **35418 Saint-Malo Cedex (FR)**

(56) Documents cités:
**EP-A2- 1 814 082     US-B1- 9 986 151**

**Description**

L'invention concerne un procédé de reconnaissance automatique de visage ainsi qu'un système mettant en œuvre ledit procédé.

ETAT DE LA TECHNIQUE ANTERIEURE

Face à une recrudescence des usurpations d'identité, des tentatives de fraudes et du piratage de données informatiques, la sécurisation des données et le contrôle d'accès sont devenus des enjeux majeurs. Les techniques basées sur une utilisation de données biométriques sont réputées pour leur haut niveau de fiabilité. La reconnaissance automatique de visage, aussi appelée reconnaissance faciale, fait parties des techniques utilisant des données biométriques. Cette technique comprend une acquisition d'au moins une image d'un utilisateur, une extraction de données biométriques à partir de chaque image acquise, puis une comparaison des données biométriques extraites avec des données biométriques d'individus connus.

Certains terminaux, tels que certains téléphones intelligents (« smartphone » en terminologie anglo-saxonne), sont équipés d'un système de reconnaissance faciale. Ces systèmes de reconnaissance faciale utilisent généralement un capteur d'images du terminal pour acquérir des images d'un utilisateur à identifier ou à authentifier. Dans le cas d'une identification, cette image de l'utilisateur (ou au moins une information représentative de cette image) est comparée avec un ensemble d'images de référence (ou d'informations représentatives d'images de référence) contenues dans une base de données. Dans le cas d'une authentification, cette image (ou au moins une information représentative de cette image) est comparée à une seule image de référence (ou à une information représentative de l'image de référence). La comparaison permet de déterminer si l'image de l'utilisateur capturée appartient ou non à une personne référencée dans la base de données ou si la personne est bien celle qu'elle prétend être. Il est connu des procédés de reconnaissance faciale, tels que le procédé décrit dans la demande de brevet FR3059450, consistant à acquérir une séquence d'images représentatives d'un visage, le visage subissant des variations d'illumination pendant l'acquisition des images selon une séquence d'éclairage connue. Connaissant ainsi les variations d'illumination, on sait déterminer des variations de caractéristiques biométriques qui sont normalement induites sur l'utilisateur. Lors d'une authentification ou d'une identification, les variations des caractéristiques biométriques acquises sont comparées à des variations de caractéristiques biométriques de référence afin d'authentifier ou identifier l'utilisateur.

Lorsque ce type de procédé est exécuté par un terminal de type téléphone intelligent, l'éclairage est généralement produit par le terminal lui-même et notamment par un écran du téléphone intelligent, ce qui facilite une génération d'un éclairage variable. On note toutefois qu'un écran de terminal génère un éclairage peu puissant. Lorsque le procédé de reconnaissance faciale est lancé dans un environnement très éclairé, par exemple en plein soleil, les variations d'illumination produites par le terminal sont difficilement perceptibles pour le capteur d'images du terminal. Les performances du procédé de reconnaissance faciale s'en trouvent alors fortement amoindries. Ces procédés ont alors un taux d'erreurs (i.e. authentification négative d'un utilisateur valide, authentification positive d'un utilisateur non valide) important.

Il est souhaitable de pallier ces inconvénients de l'état de la technique. Il est notamment souhaitable de proposer une méthode permettant notamment d'éviter d'authentifier positivement un utilisateur qui ne le devrait pas.

EXPOSE DE L'INVENTION

Selon un premier aspect de l'invention, l'invention concerne un procédé de reconnaissance automatique de visage exécuté par un système comprenant un dispositif de capture d'images et une source lumineuse apte à éclairer un visage positionné devant ledit dispositif, le procédé de reconnaissance automatique de visage comprenant une procédure de reconnaissance comprenant une acquisition d'une pluralité d'images d'un visage, la source lumineuse produisant un éclairage différent du visage lors de chaque acquisition d'image et une extraction de valeurs représentatives du visage à partir de la pluralité d'images. Le procédé comprend en outre: effectuer une acquisition d'une première image d'un visage à partir dudit dispositif ; estimer une valeur, dite valeur estimée, représentative d'un rapport signal sur bruit d'une image dudit visage éclairée exclusivement par la source lumineuse en effectuant un produit entre une valeur représentative d'un rapport signal sur bruit de référence, dite valeur de référence, la valeur de référence ayant été calculée à partir d'une valeur représentative d'une image dudit visage éclairée exclusivement par la source lumineuse obtenue à partir d'une pluralité d'images dudit visage, dite pluralité de référence, un premier terme représentatif d'un rapport entre un indice de luminance globale du visage dans une scène dans laquelle se trouve le visage lors de l'acquisition de la première image et un indice de luminance globale du visage dans une scène dans laquelle se trouvait le visage lors de l'acquisition de la pluralité de référence et un deuxième terme représentatif d'un carré d'un rapport entre une valeur représentative d'une distance entre le visage et ledit dispositif lors de l'acquisition de la première image et une valeur représentative d'une distance entre le visage et ledit dispositif lors de l'acquisition de la pluralité de référence;

utiliser la valeur estimée pour déterminer si la procédure de reconnaissance doit être exécutée ou pas.

L'utilisation de l'estimation du rapport signal sur bruit permet de déterminer quand il est possible d'exécuter la procédure de reconnaissance.

Selon un mode de réalisation, la valeur représentative d'une image dudit visage éclairée exclusivement par la source lumineuse est une différence entre une deuxième image du visage acquise avec la source lumineuse éteinte et une troisième image du visage acquise avec la source lumineuse allumée.

Selon un mode de réalisation, chaque valeur représentative d'une distance entre le visage et ledit dispositif est une distance interoculaire sur le visage compris dans l'image ou la pluralité d'images correspondant à ladite valeur représentative d'une distance entre le visage et ledit dispositif.

La distance interoculaire est une valeur représentative d'une distance entre le visage et le dispositif d'acquisition relativement simple à obtenir automatiquement à partir d'une image d'un visage.

Selon un mode de réalisation, chaque indice de luminance globale est un produit entre une sensibilité ISO, un temps d'exposition, une valeur représentative d'un niveau de gris du visage dans l'image ou dans la pluralité d'images correspondant audit indice et un carré d'une ouverture dudit dispositif au moment de l'acquisition de l'image ou de la pluralité d'images correspondant audit indice ou un produit entre un inverse d'un niveau de luminosité au voisinage dudit dispositif mesuré au moment de l'acquisition de l'image ou de la pluralité d'images correspondant audit indice et une valeur représentative d'un niveau de gris dans l'image ou la pluralité d'images correspondant audit indice.

Selon un mode de réalisation, le procédé comprend en outre :
déterminer que la procédure de reconnaissance peut être exécutée lorsque la valeur estimée est supérieure à un premier seuil prédéterminé.

La valeur estimée du rapport signal sur bruit donne une indication sur le risque que la procédure de reconnaissance commette une erreur d'authentification ou d'identification. Ainsi, lorsque le risque d'erreur est trop important, la procédure de reconnaissance n'est pas appliquée.

Selon un mode de réalisation, le procédé comprend en outre : effectuer une acquisition d'une pluralité d'images du visage, dite pluralité acquise à partir dudit dispositif, chaque image de la pluralité acquise étant obtenue avec un éclairage du visage par la source lumineuse différent, et calculer une valeur, dite valeur réelle, représentative d'un rapport signal sur bruit dans les images de la pluralité acquise ; comparer la valeur réelle et la valeur estimée ; et, déterminer que la procédure de reconnaissance peut être exécutée lorsqu'une valeur représentative d'une différence entre la valeur réelle et la valeur estimée est inférieure à un deuxième seuil prédéterminé.

Selon un mode de réalisation, la pluralité acquise comprend une quatrième image du visage acquise avec la source lumineuse éteinte et une cinquième image du visage acquise avec la source lumineuse allumée.

Selon un deuxième aspect de l'invention, l'invention concerne un système de reconnaissance automatique de visage comprenant un dispositif de capture d'images et une source lumineuse apte à éclairer un visage positionné devant ledit dispositif, le système comprenant des moyens pour exécuter une procédure de reconnaissance comprenant une acquisition d'une pluralité d'images d'un visage, la source lumineuse produisant un éclairage différent du visage lors de chaque acquisition d'image et une extraction de valeurs représentatives du visage à partir de la pluralité d'images. Le système comprend en outre: des moyens d'acquisition pour effectuer une acquisition d'une première image d'un visage à partir dudit dispositif ; des moyens d'estimation pour estimer une valeur, dite valeur estimée, représentative d'un rapport signal sur bruit d'une image dudit visage éclairée exclusivement par la source lumineuse en effectuant un produit entre une valeur représentative d'un rapport signal sur bruit de référence, dite valeur de référence, la valeur de référence ayant été calculée à partir d'une valeur représentative d'une image dudit visage éclairée exclusivement par la source lumineuse obtenue à partir d'une pluralité d'images dudit visage, dite pluralité de référence, un premier terme représentatif d'un rapport entre un indice de luminance globale du visage dans une scène dans laquelle se trouve le visage lors de l'acquisition de la première image et un indice de luminance globale du visage dans une scène dans laquelle se trouvait le visage lors de l'acquisition de la pluralité de référence et un deuxième terme représentatif d'un carré d'un rapport entre une valeur représentative d'une distance entre le visage et ledit dispositif lors de l'acquisition de la première image et une valeur représentative d'une distance entre le visage et ledit dispositif lors de l'acquisition de la pluralité de référence ; des moyens de détermination utilisant la valeur estimée pour déterminer si la procédure de reconnaissance doit être exécutée ou pas.

Selon un troisième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un quatrième aspect de l'invention, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre schématiquement un exemple de mise en œuvre du procédé selon l'invention ;
[Fig. 2] illustre schématiquement un terminal adapté pour exécuter le procédé selon l'invention ;
[Fig. 3] illustre schématiquement un exemple d'architecture matérielle d'un module de traitement utilisé pour exécuter l'invention ;
[Fig. 4] illustre schématiquement un premier exemple de procédé selon l'invention ; et,
[Fig. 5] illustre schématiquement un deuxième exemple de procédé selon l'invention.

EXPOSE DETAILLE DE MODES DE REALISATION

L'invention est décrite par la suite dans un contexte où un terminal devant exécuter un procédé de reconnaissance faciale similaire au procédé décrit dans la demande de brevet FR1661737 est un téléphone intelligent. D'autres terminaux peuvent toutefois être envisagés, tels qu'une tablette ou un ordinateur portable. L'invention peut aussi concerner des systèmes de reconnaissance faciale fixe, et donc supposés correctement orientés par rapport à des sources lumineuses habituelles de leur environnement, mais qui doivent quand même vérifier si une source lumineuse temporaire ne vient pas amoindrir l'efficacité du procédé de reconnaissance faciale. Par ailleurs, l'invention est aussi adaptée à tout procédé de reconnaissance faciale utilisant des variations d'illumination du visage pour obtenir des caractéristiques biométriques, ou pour déterminer s'il s'agit d'un vrai visage ou d'une fraude.

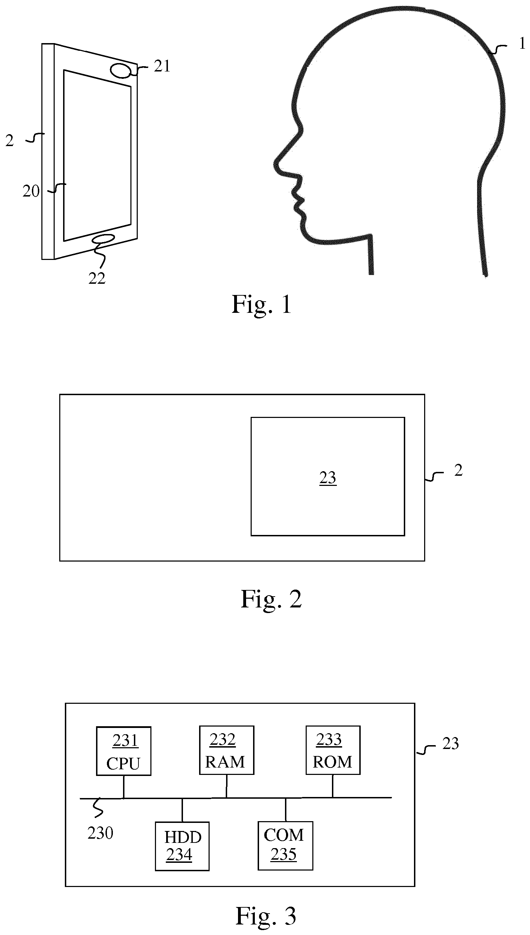

La Fig. 1 illustre schématiquement un exemple de mise en œuvre du procédé selon l'invention.

Dans la Fig. 1, un utilisateur 1 fait face à un terminal 2 de type téléphone intelligent. Le terminal 2 comprend un écran 20, une caméra frontale 21 et un bouton de commande 22. Dans cet exemple, l'utilisateur 1 doit être authentifié par un procédé de reconnaissance faciale pour pouvoir utiliser le terminal 2. Le procédé de reconnaissance faciale exécuté par le terminal 2 comprend par exemple le procédé décrit dans la demande FR1661737. Par la suite, nous appelons ce procédé « procédure de reconnaissance ».

La Fig. 2 illustre schématiquement un détail du terminal 2.

Le terminal 2 comprend un module de traitement 23 apte à exécuter le procédé de reconnaissance faciale selon l'invention.

La Fig. 3 illustre schématiquement un exemple d'architecture matérielle du module de traitement 23.

Selon l'exemple d'architecture matérielle représenté à la Fig. 3, le module de traitement 23 comprend alors, reliés par un bus de communication 230 : un processeur ou CPU (« Central Processing Unit » en anglais) 231 ; une mémoire vive RAM (« Random Access Memory » en anglais) 232 ; une mémoire morte ROM (« Read Only Memory » en anglais) 233 ; une unité de stockage telle qu'un disque dur ou un lecteur de support de stockage, tel qu'un lecteur de cartes SD (« Secure Digital » en anglais) 234 ; au moins une interface de communication 235. L'interface de communication 235 permet au module de traitement 23 de recevoir des images de la caméra frontale 21.

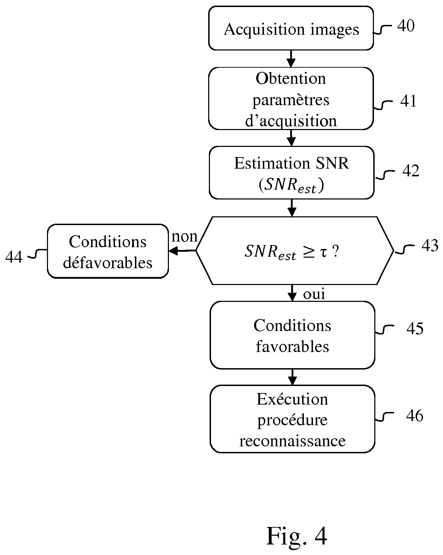

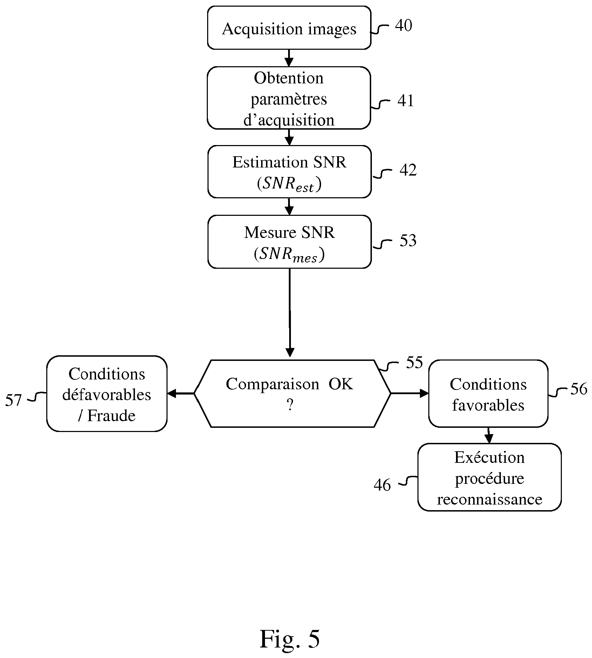

Le processeur 231 est capable d'exécuter des instructions chargées dans la RAM 232 à partir de la ROM 233, d'une mémoire externe (non représentée), d'un support de stockage (tel qu'une carte SD), ou d'un réseau de communication. Lorsque le module de traitement 23 est mis sous tension, le processeur 231 est capable de lire de la RAM 232 des instructions et de les exécuter. Ces instructions forment un programme d'ordinateur causant la mise en œuvre, par le processeur 231, de tout ou partie des procédés décrits ci-après en relation avec les Figs. 4 et 5.

Les procédés décrits ci-après en relation avec les Figs. 4 et 5 peuvent être implémentés sous forme logicielle par exécution d'un ensemble d'instructions par une machine programmable, par exemple un DSP (« Digital Signal Processor » en anglais), un microcontrôleur ou un GPU (processeur graphique, « Graphics Processing Unit » en terminologie anglo-saxonne), ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 4** illustre schématiquement un premier exemple de procédé selon l'invention.

Lors de l'exécution du procédé de la Fig. 4, l'utilisateur 1 est face à la caméra frontale 21. L'écran 20 peut être éteint ou allumé.

Le procédé décrit en relation avec la Fig. 4 débute par une étape 40 au cours de laquelle le module de traitement 23 provoque une acquisition d'une image, dite première image, par la caméra 21.

Dans une étape 41, le module de traitement 23 obtient des paramètres d'acquisition, dits *paramètres courants,* utilisés par la caméra frontale 21 lors de l'acquisition de la première image.

Dans une étape 42, le module de traitement 23 estime une valeur $SNR_{Est}$, dite valeur estimée, représentative d'un rapport signal sur bruit (« Signal to Noise Ratio (SNR) » en terminologie anglo-saxonne) d'une image dudit visage éclairée exclusivement par la source lumineuse. Pour ce faire, le module de traitement utilise une valeur de rapport signal sur bruit de référence, dite *valeur de référence, SNR$_0$*. Dans un mode de réalisation, la valeur de référence $SNR_0$ a été calculée à partir d'une différence entre une deuxième image du visage de l'utilisateur 1 acquise par la caméra frontale 21 avec la source lumineuse éteinte (c'est-à-dire l'écran 20 éteint) et une troisième image du visage de l'utilisateur 1 acquise par la caméra frontale 21 avec la source lumineuse allumée (c'est-à-dire l'écran 20 allumé). Dans ce mode de réalisation, l'écran 20 est considéré comme allumé lorsque chaque composante de couleur de l'écran 20 produit une intensité lumineuse maximum. L'écran 20 est considéré comme éteint lorsque chaque composante de couleur de l'écran 20 est éteinte. Les acquisitions des deuxième et troisième images sont très proches dans le temps de sorte que les paramètres d'acquisition de la deuxième et de la troisième images par la caméra frontale 21 sont considérés comme identiques.

Dans un mode de réalisation, la valeur de référence $SNR_0$ est calculée de la manière suivante :

$$SNR_0 = g_{x,y}\left(\frac{I_2(x,y) - I_3(x,y)}{I_3(x,y)}\right)$$

ou de la manière suivante :

$$SNR_0 = \frac{g_{x,y}\big(I_2(x,y) - I_3(x,y)\big)}{g_{x,y}\big(I_3(x,y)\big)}$$

où $I_2(x,y)$ (respectivement $I_3(x,y)$) est une valeur de pixel à une position $(x,y)$ dans la deuxième image (respectivement dans la troisième image), $g_{x,y}(i)$ calcule par exemple une moyenne (ou une valeur médiane) d'une variable $i$ sur toutes les positions de pixel $(x,y)$ possibles dans une image. La valeur de référence $SNR_0$ est donc représentative d'un rapport entre un numérateur représentant une différence entre la deuxième et la troisième images et un dénominateur représentant la troisième image. On considère que le numérateur représente une image d'un visage éclairée exclusivement par l'écran 20 et que le dénominateur représente une image du même visage éclairé exclusivement par une lumière ambiante (soleil, éclairage ambiant,...).

Dans un mode de réalisation, chaque image fournie par la caméra frontale 21 est une image en niveau de gris. Dans un mode de réalisation, chaque image fournie par la caméra frontale 21 est une image couleur. Dans ce cas, le module de traitement 23 utilise uniquement une composante de luminance de chaque image couleur pour le calcul des valeurs de rapport signal sur bruit.

Les deuxième et troisième images ont par exemple été acquises lors d'une phase d'enrôlement lors d'une première utilisation du terminal 2 par l'utilisateur 1 afin que l'utilisateur 1 puisse s'enregistrer sur le terminal 2. La valeur $SNR_{Est}$ est estimé par la relation suivante.

$$SNR_{est} = f(Param_{Curr}, Param_0).SNR_0$$

où $Param_{Curr}$ représente les paramètres courants, $Param_0$ représente des paramètres, dits paramètres de référence, de la caméra frontale 21 lors de l'acquisition des deuxième et troisième images et $f()$ est une fonction des paramètres courants $Param_{Curr}$ et des paramètres de référence $Param_0$.

Dans un mode de réalisation, la fonction $f()$ s'écrit de la manière suivante :

$$f(Param_{Curr}, Param_0) = \frac{ISO_{curr}}{ISO_0}\frac{itime_{curr}}{itime_0}\left(\frac{o_{curr}}{o_0}\right)^2\frac{nvgvis_0}{nvgvis_{curr}}\left(\frac{IOD_{curr}}{IOD_0}\right)^2$$

où $ISO_{curr}$, $itime_{curr}$, $nvgvis_{curr}$ et $o_{curr}$ sont des paramètres courants et $ISO_0$, $itime_0$, $nvgvis_0$ et $o_0$ sont des paramètres de référence. Le paramètre $ISO_{curr}$ (respectivement $ISO_0$) représente une sensibilité ISO. Le paramètre $itime_{curr}$ (respectivement $itime_0$) représente un temps d'exposition. Le paramètre $nvgvis_{curr}$ (respectivement $nvgvis_0$) est représentatif d'un niveau de gris du visage dans la première image (respectivement dans la deuxième et/ou la troisième images). Le paramètre $o_{curr}$ (respectivement $o_0$) représente une ouverture. Le terme $IOD_{curr}$ (respectivement $IOD_0$) représente

une distance interoculaire (i.e. distance entre les yeux de l'utilisateur 1). Chaque distance interoculaire est déterminée en utilisant un procédé de détection automatique des yeux dans une image. Par exemple, le procédé décrit dans le document « Projection functions for Eye Détection, Zhi-Hua Zhou and Xin Geng, Pattern Récognition, Volume 37, Issue 5, May 2004, Pages 1049-1056 » permettant de déterminer un point central des yeux est utilisé. Une fois la position du point central de chaque œil déterminée, la distance interoculaire est mesurée en nombre de pixels séparant les deux points centraux.

La fonction f() comprend un rapport entre un premier terme $\frac{ISO_{curr}.itime_{curr}.o_{curr}^2}{nvgvis_{curr}}$ et un deuxième terme $ISO_0.itime_0.o_0^2 \frac{ISO_0.itime_0.o_0^2}{nvgvis_0}$. Le premier terme est représentatif d'un indice de luminance globale du visage dans une scène dans laquelle se trouve le visage lors de l'acquisition de la première image. Le deuxième terme est représentatif d'un indice de luminance globale du visage dans une scène dans laquelle se trouvait le visage lors de l'acquisition de la deuxième et/ou la troisième images. La distance interoculaire $IOD_{curr}$ est représentative d'une distance entre la caméra 21 et le visage de l'utilisateur 1 lors de l'acquisition de la première image. La distance interoculaire $IOD_0$ est représentative d'une distance entre la caméra 21 et le visage de l'utilisateur 1 lors de l'acquisition de la deuxième et/ou la troisième images.

Dans un mode de réalisation, la sensibilité $ISO_0$ (respectivement le temps d'acquisition $itime_0$, le niveau de gris du visage $nvgvis_0$, l'ouverture $o_0$) est une moyenne entre la sensibilité ISO (respectivement le temps d'acquisition, le niveau de gris du visage, l'ouverture) utilisée lors de l'acquisition de la deuxième image et la sensibilité ISO (respectivement le temps d'acquisition, le niveau de gris du visage, l'ouverture) utilisée lors de l'acquisition de la troisième image. La distance interoculaire $IOD_0$ est une moyenne des distances interoculaires mesurées dans la deuxième et la troisième images.

Dans un mode de réalisation, la caméra 21 fournit les paramètres courants et de référence au module de traitement 23.

Dans une étape 43, le module de traitement 23 compare la valeur estimée $SNR_{est}$ à un seuil de rapport signal à bruit prédéterminé τ. Le seuil prédéterminé τ a, par exemple, été déterminé sur un ensemble d'images représentatives de visages acquises dans des conditions d'illumination variables. Par exemple, le seuil de rapport signal sur bruit prédéterminé τ est tel qu'une image ayant un rapport signal sur bruit supérieur au seuil τ a une probabilité de provoquer une erreur de la procédure de reconnaissance inférieure à un taux d'erreurs prédéterminé Δ. Par exemple le taux d'erreurs prédéterminé Δ est de « 1% ». Ainsi, en cas d'utilisation d'images ayant un rapport signal sur bruit inférieur au seuil de rapport signal sur bruit prédéterminé τ, la procédure de reconnaissance a au moins « 1% » de chance de se tromper lors d'une identification ou une authentification.

Lorsque la valeur estimée $SNR_{est}$ est inférieure au seuil τ, le module de traitement 23 considère, lors d'une étape 44, que les conditions d'acquisitions des images sont défavorables à une exécution de la procédure de reconnaissance. Dans ce cas, le module de traitement 23 affiche un message d'erreur sur l'écran du terminal 2. Par exemple, le message d'erreur invite l'utilisateur 1 à se déplacer pour effectuer son identification ou son authentification.

Lorsque la valeur estimée $SNR_{est}$ est supérieure ou égale au seuil τ, le module de traitement 23 considère, lors d'une étape 45, que les conditions d'acquisitions des images sont favorables à une exécution de la procédure de reconnaissance. Dans ce cas, le module de traitement 23 lance une exécution de la procédure de reconnaissance lors d'une étape 46.

Le procédé décrit en relation avec la Fig. 4 évite donc de lancer la procédure de reconnaissance lorsque le risque d'erreur de cette procédure est trop élevé.

Dans un mode de réalisation, la fonction f() s'écrit de la manière suivante :

$$f(Param_{curr}, Param_0) = \frac{lux_0}{lux_{curr}} \frac{nvg_0}{nvg_{curr}} \left(\frac{IOD_{curr}}{IOD_0}\right)^2$$

où $lux_0$ (respectivement $lux_{curr}$) est un niveau de luminosité mesuré par exemple par un luxmètre lors de l'acquisition de la deuxième et/ou de la troisième images (respectivement lors de l'acquisition de la première image) et $nvg_0$ (respectivement $nvg_{curr}$) est une valeur représentative d'un niveau de gris du visage dans la deuxième et/ou la troisième images $nvgvis_0$ (respectivement dans la première image $nvgvis_{curr}$) divisé par une valeur représentative d'un niveau de gris dans la deuxième image entière et/ou dans la troisième image entière $nvgglob_0$ (respectivement dans la première image entière $nvgglob_{curr}$).

$$nvg_{curr} = \frac{nvgvis_{curr}}{nvgglob_{curr}}$$

$$nvg_0 = \frac{nvgvis_0}{nvgglob_0}$$

Dans un mode réalisation, le niveau de luminosité $lux_0$ est une moyenne des niveaux de luminosité mesurés lors des acquisitions des deuxième et troisième images. Le niveau de gris $nvgglob_0$ est une moyenne des niveaux de gris des pixels de la deuxième et de la troisième images. Le niveau de gris $nvgglob_{curr}$ est une moyenne des niveaux de gris des pixels de la première image. Le niveau de gris $nvgvis_0$ est une moyenne des niveaux de gris des pixels de la deuxième et de la troisième images correspondant au visage. Le niveau de gris $nvgvis_{curr}$ est une moyenne des niveaux de gris des pixels de la première image correspondant au visage. Dans un mode de réalisation, les pixels correspondant à un visage dans une image sont déterminés par une méthode de détection automatique de visages telle la méthode décrite dans l'article « Robust Real-Time Face Détection, P. Viola, M. Jones, International Journal of Computer Vision 57(2), P. 137-154, 2004 ». Lorsque les images fournies par la caméra 21 sont des images couleurs, le module de traitement 23 utilise une moyenne des valeurs de composante de luminance de pixel des images. La fonction *f()* comprend un rapport entre un premier terme $\frac{1}{lux_{curr}} \times nvg_{curr}$ et un deuxième terme $\frac{1}{lux_0} \times nvg_0$. Le premier terme est représentatif d'un indice de luminance globale du visage dans une scène dans laquelle se trouve le visage lors de l'acquisition de la première image. Le deuxième terme est représentatif d'un indice de luminance globale du visage dans une scène dans laquelle se trouvait le visage lors de l'acquisition de la deuxième et/ou la troisième images.

Dans un mode de réalisation, les paramètres courants et de référence sont extraits d'un fichier au format EXIF (Format de fichier échangeable, « Exchangeable Image File Format » en terminologie anglo-saxonne) associé à chaque image.

Dans un mode de réalisation, d'autres valeurs représentatives de la distance entre la caméra 21 et le visage de l'utilisateur 1 peuvent être utilisées. Par exemple, la distance entre la caméra 21 et le visage de l'utilisateur 1 peut être mesurée par un télémètre.

Dans un mode de réalisation, la valeur de référence $SNR_0$ peut être déterminée à partir de plusieurs paires de deuxième *(i.e.* écran 20 éteint) et troisième images *(i.e.* écran 20 allumé). Dans ce cas, une valeur de SNR est calculée pour chaque paire de deuxième et troisième images et la valeur de référence $SNR_0$ est une moyenne ou une valeur médiane des valeurs de SNR calculées.

Dans un mode de réalisation, la valeur de référence $SNR_0$ peut être déterminée à partir d'une pluralité de deuxièmes images *(i.e.* écran 20 éteint) et une pluralité de troisièmes images *(i.e.* écran 20 allumé). Dans ce cas, une deuxième image moyenne est calculée à partir de la pluralité de deuxièmes images et une troisième image moyenne est calculée à partir de la pluralité de troisièmes images.

Dans un mode de réalisation, une deuxième image est une image acquise avec au moins une des composantes de couleur de l'écran 20 éteinte.

Dans un mode de réalisation, une troisième image est une image acquise avec au moins une composante de couleur de l'écran 20 produisant une intensité lumineuse non nulle.

On note que, dans tous les cas, l'éclairage produit par l'écran 20 pour une deuxième image est différent de l'éclairage produit par l'écran 20 pour chaque troisième image.

Jusqu'ici, nous avons considéré que l'écran 20 jouait un rôle de source lumineuse dans le procédé décrit en relation avec la Fig. 4. Dans un mode de réalisation, le procédé pourrait tout aussi bien utiliser une source lumineuse indépendante contrôlée par le module de traitement 23.

La **Fig. 5** illustre schématiquement un deuxième exemple de procédé selon l'invention.

Le procédé de la Fig. 5 débute les étapes 40, 41 et 42 déjà expliquées en relation avec la Fig. 4.

L'étape 42 est suivie d'une étape 53 au cours de laquelle le module de traitement 23 mesure une valeur de rapport signal sur bruit réelle, dite *valeur réelle, $SNR_r$.* Pour ce faire, le module de traitement 23 lance une acquisition d'une quatrième image du visage à partir de la caméra 21 avec l'écran 20 éteint et d'une cinquième image du visage à partir de la caméra 21 avec l'écran 20 allumé. A partir des quatrième et cinquième images, le module de traitement 23 calcule la valeur réelle de la même manière qu'a été calculée la valeur de référence $SNR_0$.

Lors d'une étape 55, le module de traitement 23 compare la valeur réelle $SNR_r$ à la valeur estimée $SNR_{Est}$. Lorsqu'une valeur R représentative d'un écart entre la valeur réelle $SNR_r$ et la valeur estimée $SNR_{Est}$ est supérieure à un seuil prédéterminé Ω, dit *seuil de divergence,* le module de traitement 23 considère que le visage qui est face à la caméra 21 réagit de manière anormale à l'éclairage par l'écran 20. Au moins deux raisons peuvent expliquer qu'un visage réagit de manière anormale à l'éclairage par l'écran 20 :

- les conditions d'éclairement de la scène dans laquelle se situe le visage peuvent être défavorables à une acquisition d'images. Par exemple, le visage est surexposé ou en plein soleil.
- une tentative de fraude est en cours. Le visage placé devant la caméra est par exemple une photographie d'un visage imprimée ou affichée sur un écran d'un terminal ou une représentation volumique d'une personne (*i.e.* un mannequin).

Dans ces deux cas, il est préférable de ne pas exécuter la procédure de reconnaissance. Par conséquent, lorsque la valeur $R$ représentative de l'écart entre la valeur réelle $SNR_r$ et la valeur estimée $SNR_{Est}$ est supérieure au seuil de divergence $\Omega$, le module de traitement 23 décide, lors d'une étape 57, de ne pas exécuter la procédure de reconnaissance et d'afficher, par exemple, un message d'erreur sur l'écran 20.

Lorsque la valeur $R$ représentative de l'écart entre la valeur réelle $SNR_r$ et la valeur estimée $SNR_{Est}$ est inférieure ou égale au seuil de divergence $\Omega$, le module de traitement 23 détermine, lors d'une étape 56, que rien ne s'oppose à une exécution de la procédure de reconnaissance. L'étape 56 est suivie de l'étape 46 déjà expliquée, au cours de laquelle le module de traitement 23 lance l'exécution de la procédure de reconnaissance.

Dans un mode de réalisation, la valeur $R$ représentative de l'écart entre la valeur réelle $SNR_r$ et la valeur estimée $SNR_{Est}$ est calculée par le module de traitement 23 de la manière suivante :

$$ R = \left| log\left(\frac{SNR_{\tau}}{SNR_{Est}}\right) \right| $$

Dans un mode de réalisation, la valeur réelle $SNR_r$ peut être déterminée à partir de plusieurs paires de quatrième (*i.e.* écran 20 éteint) et cinquième images (*i.e.* écran 20 allumé). Dans ce cas, une valeur de SNR est calculée pour chaque paire de quatrième et cinquième images et la valeur réelle $SNR_r$ est une moyenne ou une valeur médiane des valeurs de SNR calculées.

Dans un mode de réalisation, la valeur réelle $SNR_r$ peut être déterminée à partir d'une pluralité de quatrièmes images (*i.e.* écran 20 éteint) et une pluralité de cinquièmes images (*i.e.* écran 20 allumé). Dans ce cas, une quatrième image moyenne est calculée à partir de la pluralité de quatrièmes images et une cinquième image moyenne est calculée à partir de la pluralité de cinquièmes images.

Dans un mode de réalisation, une quatrième image est une image acquise avec au moins une des composantes de couleur de l'écran 20 éteinte.

Dans un mode de réalisation, une cinquième image est une image acquise avec au moins une composante de couleur de l'écran 20 produisant une intensité lumineuse non nulle.

On note que, dans tous les cas, l'éclairage produit par l'écran 20 pour une quatrième image est différent de l'éclairage produit par l'écran 20 pour chaque cinquième image.

Le seuil de divergence $\Omega$ a été obtenu à l'aide d'un ensemble d'images d'entraînement. L'ensemble d'images d'entraînement comprend des images de types différents : des images de visages réels acquises dans des conditions d'éclairement favorables, des images de visages réels acquises dans des conditions d'éclairement défavorables, des images de photographie d'un visage imprimée ou affichée sur un écran d'un terminal et des images de mannequin.

Pour chaque type d'images de l'ensemble d'images, des valeurs $R$, chacune représentative d'un écart entre une valeur réelle $SNR_r$ et une valeur estimée $SNR_{Est}$, sont calculées. Le seuil de divergence $\Omega$ est déterminé de manière à distinguer les valeurs $R$ calculées à partir d'images réels acquises dans des conditions d'éclairement favorables des valeurs $R$ calculées à partir des autres types d'images.

On peut noter que les procédés décrits dans les Figs. 4 et 5 pourraient être combinés. Ainsi, lorsque lors de l'étape 43 la valeur estimée $SNR_{est}$ est supérieure ou égale au seuil de rapport signal à bruit prédéterminé $\tau$, l'étape 43 pourrait être suivie de l'étape 53. Dans ce cas, il faudrait remplir la condition de l'étape 43 et la condition de l'étape 55 pour pouvoir exécuter la procédure de reconnaissance.

**Revendications**

1. Procédé de reconnaissance automatique de visage exécuté par un système comprenant un dispositif de capture d'images et une source lumineuse apte à éclairer un visage positionné devant ledit dispositif, le procédé de reconnaissance automatique de visage comprenant une procédure de reconnaissance comprenant une acquisition d'une pluralité d'images d'un visage, la source lumineuse produisant un éclairage différent du visage lors de chaque acquisition d'image et une extraction de valeurs représentatives du visage à partir de la pluralité d'images, **caractérisé en ce que** le procédé comprend en outre:

- effectuer une acquisition (40) d'une première image d'un visage à partir dudit dispositif ;
- estimer (42) une valeur, dite valeur estimée, représentative d'un rapport signal sur bruit d'une image dudit visage éclairée exclusivement par la source lumineuse en effectuant un produit entre une valeur représentative d'un rapport signal sur bruit de référence, dite valeur de référence, la valeur de référence ayant été calculée à partir d'une valeur représentative d'une image dudit visage éclairée exclusivement par la source lumineuse obtenue à partir d'une pluralité d'images dudit visage, dite pluralité de référence, un premier terme représentatif d'un rapport entre un indice de luminance globale du visage dans une scène dans laquelle se trouve le visage lors de l'acquisition de la première image et un indice de luminance globale du visage dans une scène dans laquelle se trouvait le visage lors de l'acquisition de la pluralité de référence et un deuxième terme représentatif d'un carré d'un rapport entre une valeur représentative d'une distance entre le visage et ledit dispositif lors de l'acquisition de la première image et une valeur représentative d'une distance entre le visage et ledit dispositif lors de l'acquisition de la pluralité de référence ;
- utiliser (43) la valeur estimée pour déterminer si la procédure de reconnaissance doit être exécutée ou pas.

2. Procédé selon la revendication 1, **caractérisé en ce que** la valeur représentative d'une image dudit visage éclairée exclusivement par la source lumineuse est une différence entre une deuxième image du visage acquise avec la source lumineuse éteinte et une troisième image du visage acquise avec la source lumineuse allumée.

3. Procédé selon la revendication 1 ou 2, **caractérisé en ce que** chaque valeur représentative d'une distance entre le visage et ledit dispositif est une distance interoculaire sur le visage compris dans l'image ou la pluralité d'images correspondant à ladite valeur représentative d'une distance entre le visage et ledit dispositif.

4. Procédé selon la revendication 1, 2 ou 3, **caractérisé en ce que** chaque indice de luminance globale est un produit entre une sensibilité ISO, un temps d'exposition et un carré d'une ouverture dudit dispositif au moment de l'acquisition de l'image ou de la pluralité d'images correspondant audit indice ou un produit entre un inverse d'un niveau de luminosité au voisinage dudit dispositif mesuré au moment de l'acquisition de l'image ou de la pluralité d'images correspondant audit indice et une valeur représentative d'un niveau de gris dans l'image ou la pluralité d'images correspondant audit indice.

5. Procédé selon l'une quelconque des revendications précédentes, **caractérisé en ce que** le procédé comprend en outre : déterminer que la procédure de reconnaissance peut être exécutée lorsque la valeur estimée est supérieure à un premier seuil prédéterminé.

6. Procédé selon l'une quelconque des revendications précédentes, **caractérisé en ce que** le procédé comprend en outre :

- effectuer une acquisition d'une pluralité d'images du visage, dite pluralité acquise, à partir dudit dispositif, chaque image de la pluralité acquise étant obtenue avec un éclairage du visage par la source lumineuse différent, et calculer une valeur, dite valeur réelle, représentative d'un rapport signal sur bruit dans les images de la pluralité acquise ;
- comparer la valeur réelle et la valeur estimée ; et,
- déterminer que la procédure de reconnaissance peut être exécutée lorsqu'une valeur représentative d'une différence entre la valeur réelle et la valeur estimée est inférieure à un deuxième seuil prédéterminé.

7. Procédé selon la revendication 6, **caractérisé en ce que** la pluralité acquise comprend une quatrième image du visage acquise avec la source lumineuse éteinte et une cinquième image du visage acquise avec la source lumineuse allumée.

8. Système de reconnaissance automatique de visage comprenant un dispositif de capture d'images et une source lumineuse apte à éclairer un visage positionné devant ledit dispositif, le système comprenant des moyens pour exécuter une procédure de reconnaissance comprenant une acquisition d'une pluralité d'images d'un visage, la source lumineuse produisant un éclairage différent du visage lors de chaque acquisition d'image et une extraction de valeurs représentatives du visage à partir de la pluralité d'images, **caractérisé en ce que** le système comprend en outre:

- des moyens d'acquisition pour effectuer une acquisition (40) d'une première image d'un visage à partir dudit dispositif ;
- des moyens d'estimation pour estimer (42) une valeur, dite valeur estimée, représentative d'un rapport signal sur bruit d'une image dudit visage éclairée exclusivement par la source lumineuse en effectuant un produit entre une valeur représentative d'un rapport signal sur bruit de référence, dite valeur de référence, la valeur de référence ayant été calculée à partir d'une valeur représentative d'une image dudit visage éclairée exclusivement par la source lumineuse obtenue à partir d'une pluralité d'images dudit visage, dite pluralité de référence, un premier terme représentatif d'un rapport entre un indice de luminance globale du visage dans une scène dans laquelle se trouve le visage lors de l'acquisition de la première image et un indice de luminance globale du visage dans une scène dans laquelle se trouvait le visage lors de l'acquisition de la pluralité de référence et un deuxième terme représentatif d'un carré d'un rapport entre une valeur représentative d'une distance entre le visage et ledit dispositif lors de l'acquisition de la première image et une valeur représentative d'une distance entre le visage et ledit dispositif lors de l'acquisition de la pluralité de référence ;
- des moyens de détermination utilisant (43) la valeur estimée pour déterminer si la procédure de reconnaissance doit être exécutée ou pas.

9. Programme d'ordinateur, **caractérisé en ce qu'**il comprend des instructions pour mettre en œuvre, par un dispositif (23), le procédé selon l'une quelconque des revendications 1 à 7, lorsque ledit programme est exécuté par un processeur dudit dispositif.

10. Moyens de stockage, **caractérisés en ce qu'**ils stockent un programme d'ordinateur comprenant des instructions pour mettre en œuvre, par un dispositif (23), le procédé selon l'une quelconque des revendications 1 à 7, lorsque ledit programme est exécuté par un processeur dudit dispositif.

**Patentansprüche**

1. Verfahren zur automatischen Gesichtserkennung, ausgeführt von einem System, das eine Bildaufnahmevorrichtung und eine Lichtquelle enthält, die ein vor der Vorrichtung positioniertes Gesicht beleuchten kann, wobei das Verfahren zur automatischen Gesichtserkennung eine Erkennungsprozedur enthält, die eine Erfassung einer Vielzahl von Bildern eines Gesichts, wobei die Lichtquelle bei jeder Bilderfassung eine andere Beleuchtung des Gesichts erzeugt, und eine Gewinnung von repräsentativen Werten des Gesichts ausgehend von der Vielzahl von Bildern enthält, **dadurch gekennzeichnet, dass** das Verfahren außerdem enthält:

- Ausführen einer Erfassung (40) eines ersten Bilds eines Gesichts ausgehend von der Vorrichtung;
- Schätzen (42) eines geschätzter Wert genannten Werts, der für ein Signal-Rausch-Verhältnis eines ausschließlich von der Lichtquelle beleuchteten Bilds des Gesichts repräsentativ ist, indem ein Produkt ausgeführt wird zwischen einem Bezugswert genannten, für ein Signal-Rausch-Bezugsverhältnis repräsentativen Wert, wobei der Bezugswert ausgehend von einem für ein ausschließlich von der Lichtquelle beleuchtetes Bild des Gesichts repräsentativen Wert berechnet wurde, das ausgehend von einer Vielzahl von Bildern des Gesichts, Bezugsvielzahl genannt, erhalten wird, einem ersten Term repräsentativ für ein Verhältnis zwischen einem globalen Leuchtdichteindex des Gesichts in einer Szene, in der das Gesicht sich bei der Erfassung des ersten Bilds befindet, und einem globalen Leuchtdichteindex des Gesichts in einer Szene, in der das Gesicht sich bei der Erfassung der Bezugsvielzahl befand, und einem zweiten Term repräsentativ für ein Quadrat eines Verhältnisses zwischen einem für einen Abstand zwischen dem Gesicht und der Vorrichtung bei der Erfassung des ersten Bilds repräsentativen Wert und einem für einen Abstand zwischen dem Gesicht und der Vorrichtung bei der Erfassung der Bezugsvielzahl repräsentativen Wert;
- Verwenden (43) des geschätzten Werts, um zu bestimmen, ob die Erkennungsprozedur ausgeführt werden muss oder nicht.

2. Verfahren nach Anspruch 1, **dadurch gekennzeichnet, dass** der für ein ausschließlich von der Lichtquelle beleuchtetes Bild des Gesichts repräsentative Wert eine Differenz zwischen einem mit ausgeschalteter Lichtquelle erfassten zweiten Bild des Gesichts und einem mit eingeschalteter Lichtquelle erfassten dritten Bild des Gesichts ist.

3. Verfahren nach Anspruch 1 oder 2, **dadurch gekennzeichnet, dass** jeder für einen Abstand zwischen dem Gesicht und der Vorrichtung repräsentative Wert ein im Bild oder der Vielzahl von Bildern enthaltener Augenabstand auf dem Gesicht entsprechend dem für einen Abstand zwischen dem Gesicht und der Vorrichtung repräsentativen Wert ist.

**4.** Verfahren nach Anspruch 1, 2 oder 3, **dadurch gekennzeichnet, dass** jeder globale Leuchtdichteindex ein Produkt aus einer ISO-Empfindlichkeit, einer Belichtungszeit und einem Quadrat einer Apertur der Vorrichtung im Moment der Erfassung des Bilds oder der Vielzahl von Bildern entsprechend dem Index oder ein Produkt aus einem Umkehrwert eines Helligkeitspegels in der Nähe der Vorrichtung gemessen im Moment der Erfassung des Bilds oder der Vielzahl von Bildern entsprechend dem Index und einem für einen Graupegel im Bild oder der Vielzahl von Bildern entsprechend dem Index repräsentativen Wert ist.

**5.** Verfahren nach einem der vorhergehenden Ansprüche, **dadurch gekennzeichnet, dass** das Verfahren außerdem enthält: Bestimmen, dass die Erkennungsprozedur ausgeführt werden kann, wenn der geschätzte Wert höher als eine erste vorbestimmte Schwelle ist.

**6.** Verfahren nach einem der vorhergehenden Ansprüche, **dadurch gekennzeichnet, dass** das Verfahren außerdem enthält:

- Ausführen einer Erfassung einer Vielzahl von Bildern des Gesichts, erfasste Vielzahl genannt, ausgehend von der Vorrichtung, wobei jedes Bild der erfassten Vielzahl mit einer anderen Beleuchtung des Gesichts durch die Lichtquelle erhalten wird, und Berechnen eines Werts, realer Wert genannt, der für ein Signal-Rausch-Verhältnis in den Bildern der erfassten Vielzahl repräsentativ ist;
- Vergleichen des realen Werts und des geschätzten Werts; und
- Bestimmen, dass die Erkennungsprozedur ausgeführt werden kann, wenn ein für eine Differenz zwischen dem realen Wert und dem geschätzten Wert repräsentativer Wert niedriger als eine zweite vorbestimmte Schwelle ist.

**7.** Verfahren nach Anspruch 6, **dadurch gekennzeichnet, dass** die erfasste Vielzahl ein mit ausgeschalteter Lichtquelle erfasstes viertes Bild des Gesichts und ein mit eingeschalteter Lichtquelle erfasstes fünftes Bild des Gesichts enthält.

**8.** System zur automatischen Gesichtserkennung, das eine Bildaufnahmevorrichtung und eine Lichtquelle enthält, die ein vor der Vorrichtung positioniertes Gesicht beleuchten kann, wobei das System Einrichtungen enthält, um eine Erkennungsprozedur auszuführen, die eine Erfassung einer Vielzahl von Bildern eines Gesichts, wobei die Lichtquelle bei jeder Bilderfassung eine andere Beleuchtung des Gesichts erzeugt, und eine Gewinnung von für das Gesicht repräsentativen Bildern ausgehend von der Vielzahl von Bildern enthält, **dadurch gekennzeichnet, dass** das System außerdem enthält:

- Erfassungseinrichtungen, um eine Erfassung (40) eines ersten Bilds eines Gesichts ausgehend von der Vorrichtung auszuführen;
- Einrichtungen zum Schätzen (42) eines geschätzter Wert genannten Werts, der für ein Signal-Rausch-Verhältnis eines ausschließlich von der Lichtquelle beleuchteten Bilds des Gesichts repräsentativ ist, indem ein Produkt ausgeführt wird zwischen einem Bezugswert genannten, für ein Signal-Rausch-Bezugsverhältnis repräsentativen Wert, wobei der Bezugswert ausgehend von einem für ein ausschließlich von der Lichtquelle beleuchtetes Bild des Gesichts repräsentativen Wert berechnet wurde, das ausgehend von einer Vielzahl von Bildern des Gesichts, Bezugsvielzahl genannt, erhalten wird, einem ersten Term repräsentativ für ein Verhältnis zwischen einem globalen Leuchtdichteindex des Gesichts in einer Szene, in der das Gesicht sich bei der Erfassung des ersten Bilds befindet, und einem globalen Leuchtdichteindex des Gesichts in einer Szene, in der das Gesicht sich bei der Erfassung der Bezugsvielzahl befand, und einem zweiten Term repräsentativ für ein Quadrat eines Verhältnisses zwischen einem für einen Abstand zwischen dem Gesicht und der Vorrichtung bei der Erfassung des ersten Bilds repräsentativen Wert und einem für einen Abstand zwischen dem Gesicht und der Vorrichtung bei der Erfassung der Bezugsvielzahl repräsentativen Wert;
- Bestimmungseinrichtungen, die den geschätzten Wert verwenden (43), um zu bestimmen, ob die Erkennungsprozedur ausgeführt werden soll oder nicht.

**9.** Computerprogramm, **dadurch gekennzeichnet, dass** es Anweisungen zur Durchführung, durch eine Vorrichtung (23), des Verfahrens nach einem der Ansprüche 1 bis 7 enthält, wenn das Programm von einem Prozessor der Vorrichtung ausgeführt wird.

**10.** Speichereinrichtungen, **dadurch gekennzeichnet, dass** sie ein Computerprogramm speichern, das Anweisungen enthält, um durch eine Vorrichtung (23) das Verfahren nach einem der Ansprüche 1 bis 7 durchzuführen, wenn das Programm von einem Prozessor der Vorrichtung ausgeführt wird.

**Claims**

1.  Automatic facial recognition method executed by a system comprising an image capturing device and a light source able to illuminate a face positioned in front of said device, the automatic facial recognition method comprising a recognition procedure comprising acquiring a plurality of images of a face, the light source producing a different illumination of the face during each image acquisition and extracting values representative of the face from the plurality of images, **characterized in that** the method furthermore comprises:

    - acquiring (40) a first image of a face from said device;
    - estimating (42) a value, called estimated value, representative of a signal-to-noise ratio of an image of said face illuminated exclusively by the light source by calculating a product of a value representative of a reference signal-to-noise ratio, called reference value, the reference value having been calculated from a value representative of an image of said face illuminated exclusively by the light source and obtained from a plurality of images of said face, called reference plurality, a first term representative of a ratio between an overall luminance index of the face in a scene in which the face is located during the acquisition of the first image and an overall luminance index of the face in a scene in which the face was located during the acquisition of the reference plurality, and a second term representative of a square of a ratio between a value representative of a distance between the face and said device during the acquisition of the first image and a value representative of a distance between the face and said device during the acquisition of the reference plurality;
    - using (43) the estimated value to determine whether or not the recognition procedure should be executed.

2.  Method according to Claim 1, **characterized in that** the value representative of an image of said face illuminated exclusively by the light source is a difference between a second image of the face acquired with the light source switched off and a third image of the face acquired with the light source switched on.

3.  Method according to Claim 1 or 2, **characterized in that** each value representative of a distance between the face and said device is an inter-eye distance on the face contained in the image or the plurality of images corresponding to said value representative of a distance between the face and said device.

4.  Method according to Claim 1, 2 or 3, **characterized in that** each overall luminance index is a product of an ISO sensitivity, an exposure time and a square of an aperture of said device at the time of acquisition of the image or of the plurality of images corresponding to said index or a product of a reciprocal of a brightness level in the vicinity of said device measured at the time of acquisition of the image or of the plurality of images corresponding to said index and a value representative of a greyscale level in the image or the plurality of images corresponding to said index.

5.  Method according to any one of the preceding claims, **characterized in that** the method furthermore comprises: determining that the recognition procedure is able to be executed when the estimated value is greater than a first predetermined threshold.

6.  Method according to any one of the preceding claims, **characterized in that** the method furthermore comprises:

    - acquiring a plurality of images of the face, called acquired plurality, from said device, each image of the acquired plurality being obtained with a different illumination of the face by the light source, and calculating a value, called actual value, representative of a signal-to-noise ratio in the images of the acquired plurality;
    - comparing the actual value and the estimated value; and
    - determining that the recognition procedure is able to be executed when a value representative of a difference between the actual value and the estimated value is less than a second predetermined threshold.

7.  Method according to Claim 6, **characterized in that** the acquired plurality comprises a fourth image of the face acquired with the light source switched off and a fifth image of the face acquired with the light source switched on.

8.  Automatic facial recognition system comprising an image capturing device and a light source able to illuminate a face positioned in front of said device, the system comprising means for executing a recognition procedure comprising acquiring a plurality of images of a face, the light source producing a different illumination of the face during each image acquisition and extracting values representative of the face from the plurality of images, **characterized in that** the system furthermore comprises:

    - acquisition means for acquiring (40) a first image of a face from said device;

- estimation means for estimating (42) a value, called estimated value, representative of a signal-to-noise ratio of an image of said face illuminated exclusively by the light source by calculating a product of a value representative of a reference signal-to-noise ratio, called reference value, the reference value having been calculated from a value representative of an image of said face illuminated exclusively by the light source and obtained from a plurality of images of said face, called reference plurality, a first term representative of a ratio between an overall luminance index of the face in a scene in which the face is located during the acquisition of the first image and an overall luminance index of the face in a scene in which the face was located during the acquisition of the reference plurality, and a second term representative of a square of a ratio between a value representative of a distance between the face and said device during the acquisition of the first image and a value representative of a distance between the face and said device during the acquisition of the reference plurality;

- determination means using (43) the estimated value to determine whether or not the recognition procedure should be executed.

9. Computer program, **characterized in that** it comprises instructions for a device (23) to implement the method according to any one of Claims 1 to 7 when said program is executed by a processor of said device.

10. Storage means, **characterized in that** they store a computer program comprising instructions for a device (23) to implement the method according to any one of Claims 1 to 7 when said program is executed by a processor of said device.

Fig. 1

Fig. 2

Fig. 3

```
┌─────────────────────┐
│ Acquisition images  │╭─ 40
└─────────────────────┘
          │
          ▼
┌─────────────────────┐
│     Obtention       │
│     paramètres      │╭─ 41
│    d'acquisition    │
└─────────────────────┘
          │
          ▼
┌─────────────────────┐
│   Estimation SNR    │╭─ 42
│     (SNRest)        │
└─────────────────────┘
          │
          ▼
```

$SNR_{est} \geq \tau$ ?   ╭─ 43

non

┌─────────────────────┐
│     Conditions      │
44 ─╮  défavorables    │
└─────────────────────┘

oui

```
┌─────────────────────┐
│     Conditions      │╭─ 45
│     favorables      │
└─────────────────────┘
          │
          ▼
┌─────────────────────┐
│      Exécution      │
│      procédure      │╭─ 46
│   reconnaissance    │
└─────────────────────┘
```

Fig. 4

Acquisition images — 40

↓

Obtention
paramètres
d'acquisition — 41

↓

Estimation SNR
($SNR_{est}$) — 42

↓

Mesure SNR
($SNR_{mes}$) — 53

↓

Conditions
défavorables
/ Fraude — 57 ← Comparaison OK ? — 55 → Conditions
favorables — 56

↓

Exécution
procédure
reconnaissance — 46

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3059450

- FR 1661737

**Littérature non-brevet citée dans la description**

- **ZHI-HUA ZHOU ; XIN GENG.** Projection functions for Eye Détection. *Pattern Récognition,* Mai 2004, vol. 37 (5), 1049-1056

- **P. VIOLA ; M. JONES.** Robust Real-Time Face Détection. *International Journal of Computer Vision,* 2004, vol. 57 (2), 137-154